Europäisches Patentamt

European Patent Office

Office européen des brevets

(11) Publication number: **0 061 922**
**B1**

# (12) EUROPEAN PATENT SPECIFICATION

(45) Date of publication of patent specification: **21.08.85**

(51) Int. Cl.⁴: **B 05 B 12/00**, G 05 D 7/06

(21) Application number: **82301640.7**

(22) Date of filing: **29.03.82**

(54) Method, and system, for spraying.

(30) Priority: **27.03.81 GB 8109652**

(43) Date of publication of application:
**06.10.82 Bulletin 82/40**

(45) Publication of the grant of the patent:
**21.08.85 Bulletin 85/34**

(84) Designated Contracting States:
**AT BE CH DE FR GB IT LI LU NL SE**

(56) References cited:
**DE-A- 936 671**
**FR-A-1 216 721**
**FR-A-2 135 505**
**FR-A-2 342 796**
**US-A-2 491 445**

(73) Proprietor: **BL TECHNOLOGY LIMITED**
**35-38 Portman Square**
**London W1H OHQ (GB)**

(72) Inventor: **Piper, Francis Raymond**
**5 Cedarwood Gardens**
**Evesham Worcestershire (GB)**
Inventor: **Bray, David James**
**6 Orchard Road**
**Bromsgrove Worcestershire B61 8HZ (GB)**

(74) Representative: **Unwin, Stephen Geoffrey et al**
**ARG Patent Department Cowley Body Plant**
**Oxford OX4 5NL (GB)**

Courier Press, Leamington Spa, England.

## Description

This invention relates to a spraying system and to a method of operating a spray unit.

The term "medium" is used in this specification to cover not only homogeneous liquids but also heterogeneous liquids in which particulate or fibrous components are borne by a carrier liquid.

A typical spraying system for depositing medium such as paint or other protective material onto prefabricated units comprises a bulk storage from which a pump withdraws and pressurises medium for feeding along pipework to a spray gun for use in processes known as "airless" or "air assisted" spraying. In the case where the pump produces pulses or surges an accumulator would be fitted to smooth the flow of medium. The gun incorporates a jet, nozzle or tip from which atomised medium issues in a spray pattern. The spray pattern is dependent on a number of factors including jet shape and size, the pressure drop across the jet, the viscosity of the medium to be sprayed and (for air assisted spraying) the air supply characteristics. The spray pattern produced changes if any of these factors change and it is therefore often difficult to operate the spraying system in a stable manner.

FR—A—1 216 721 discloses a system for injection of fuel into a combustion engine and makes use of the phenomenon that electrostatic charges are induced when a fluid flows through a conduit to measure the flow rate of the fuel.

According to a first aspect of this invention there is provided a spraying system comprising a spray unit having a nozzle which is arranged to be coupled by a feed line to a pump supplying pressurised medium, the nozzle being formed of electrically conducting material but electrically isolated from the remainder of the spray unit; a voltage monitor for detecting the voltage on the nozzle; a setting device for establishing one or more predetermined voltages indicative of a desired or optimum spray pattern; and a comparator for comparing predetermined voltages with the detected voltage.

According to a second aspect of this invention there is provided a method of operating a spray unit having a nozzle which is formed of electrically conducting material but is electrically isolated from the remainder of the spray unit comprising the steps of: detecting the voltage on the nozzle as a medium is sprayed therefrom and comparing the detected voltage with one or more predetermined voltages indicative of a desired or optimum spray pattern.

Preferred features of this invention will be apparent from the subsidiary claims of the specification.

The present invention arises from considering the ionising effect occurring in medium when it is forced under pressure through a jet or nozzle. In being forced through the jet electric charges are carried away in the spray of liquid and in material entrained with it and a charge of opposite polarity is retained on the conducting jet body. It has been found that the resulting instantaneous potential relative to a nominal earth provides a measure of the stability and other operating characteristics of the resulting spray pattern.

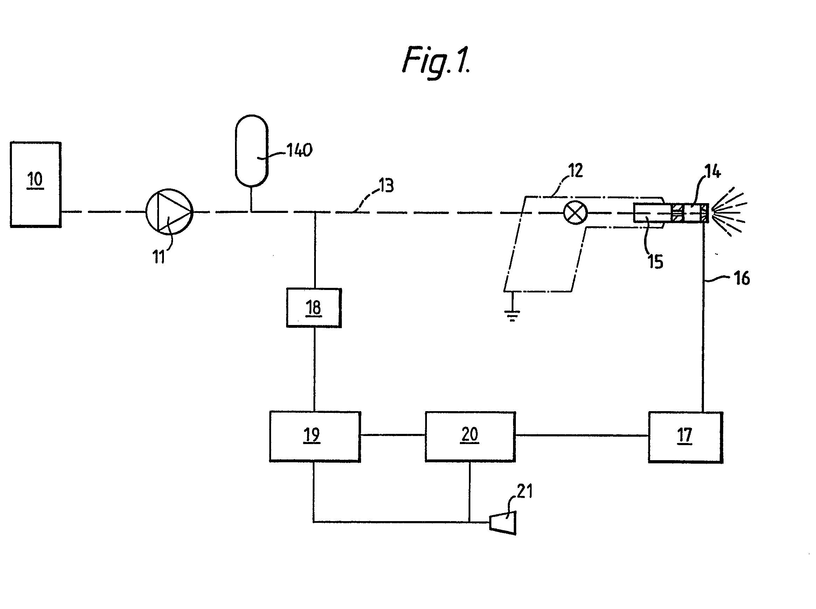

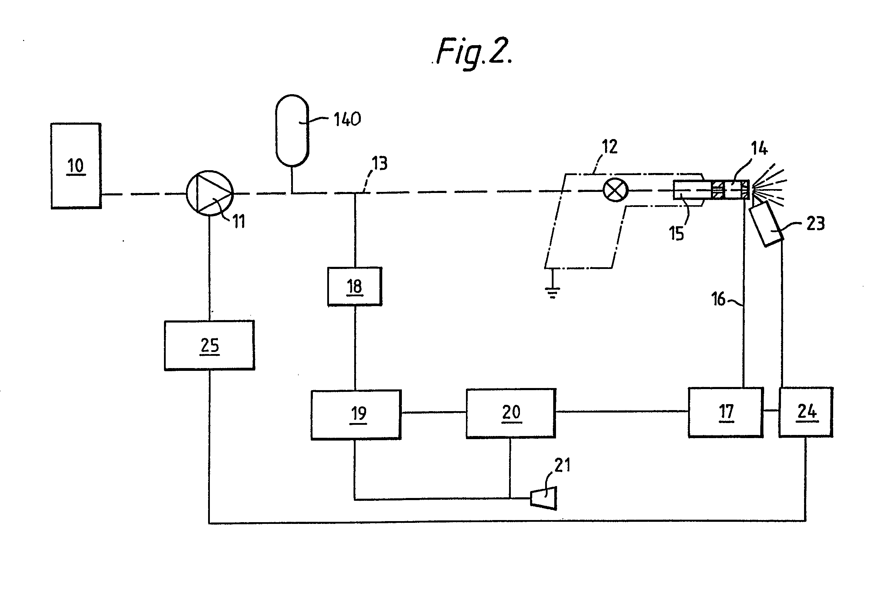

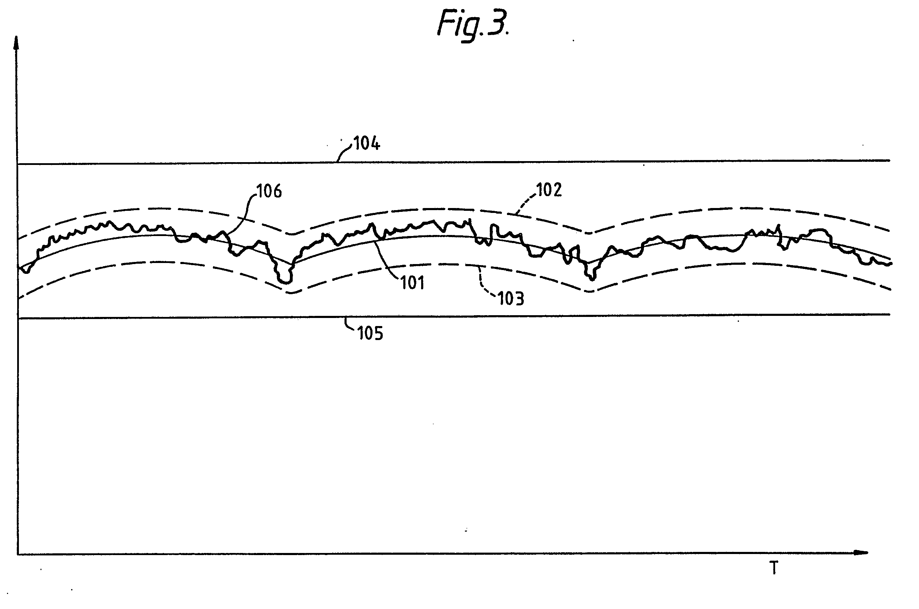

Two embodiments of the invention will now be described with reference to the accompanying drawings of which: Figures 1 and 2 are block diagrams of spray systems for depositing a protective medium on a vehicle body during manufacture thereof; and Figure 3 shows variations in voltage, relative to time, of a spray nozzle referred to in connection with Figures 1 and 2. In the descriptions associated with Figures 1 and 2 similar reference numerals are used to refer to components having a similar function. The flow of coating medium through the system in both figures is shown by a broken line. Electrical connections are shown by continuous lines.

Coating medium from a bulk supply 10 is fed by a reciprocating pump 11 to the body 12 of a spray gun by way of a supply line 13. Accumulator 140 is coupled to the supply line 13 and functions to absorb pressure pulses occurring in medium in line 13. The body 12 has secured to it a spray nozzle 14 (otherwise known as a jet or tip) which is of a material of low electrical resistance. The nozzle 14 is secured to the body 12 by way of a collar 15 of material which is an electrical insulator. The body 12 of the gun is earthed. Nozzle 14 is connected by a line 16 to a voltage monitoring unit 17. Liquid pressure in line 13 is detected by means of a pressure transducer 18 whose output is fed to adjustable limit setting units 19, 20. Unit 19 provides as output a signal or signals representing the limiting continuous operation pressures which are acceptable during operation of the system. Unit 20 provides a signal representing predetermined limits of operating pressure for transient pressure pulses for the system and voltage detected on the jet body. In the event that either or both units 19, 20 detects an out-of-limit condition, an alarm 21 is operated. Under normal operating conditions, the output of transducer 18 is also fed to a monitor (not shown) to display a visual trace of the operation of the system for evaluation by an operator.

Figure 3 shows a typical visual display record of voltage (V) in the form of a voltage analogue against time (T). Trace 101 is of a voltage analogue corresponding to supply line pressure as sensed by transducer 18. The distinctively humped appearance arises from the pressurising of the medium in the supply line 13 by the pump 11 which is of double acting reciprocating type. The fine pressure limits shown as traces 102, 103 are generated by fine limit setting unit 19. The gross predetermined limits of traces 104, 105 are generated by gross limit setting unit 20. The trace 106 represent the voltage arising from the electrical charge generated on the body 14 of the nozzle on ionisation of medium forced through the nozzle and forming a spray of medium for subsequent deposition on a vehicle body.

Figure 2, in addition to items whose function is similar to that already described in connection with Figure 1, incorporates certain additional components. The nozzle 14 has mounted with it on gun 12 a nozzle size adjuster 23 (which incorporates a mechanical clearing device). When the voltage monitor 17 detects a change in voltage on nozzle body 14 (for example due to partial blockage of the nozzle with a consequent drop in throughput of sprayable medium) a feedback control unit 24 responds to an output from the monitor 17 and energises the adjustor 23 to act in a sense to restore the voltage on nozzle body 14 to the predetermined value. This can be achieved by either momentarily changing the size of the nozzle or by operating a mechanical device for clearing the orifice. In this situation the nozzle body 14, monitor 17, control unit 24 and adjustor 23 operate as a feedback loop controlling the operation of the jet in nozzle body 14.

A pump control unit 25 is provided as an alternative to the adjustor 23 or as a further regulator for operation of the system. The feedback control 24 transmits a signal to pump control unit 25 if the monitor 17 output indicates a progressive change in the voltage on the nozzle body 14. This could arise, for example, in the use of a fresh supply of medium which differs in viscosity from the medium previously used. In this case the control 24 operates to cause the pump control unit 25 to appropriately vary the pump speed.

One advantage afforded by the embodiment illustrated in Fig. 2 arises from the self-regulatory control of the system. Once the system has been set up to provide an optimised spray pattern from the jet the system tends to restore the desired pattern regardless of changes such as partial blockages, changes in pressure drop, and changes in medium viscosity. The system described thus lends itself for use in robot spraying systems or in spraying environments where a human operator would be faced with health hazard.

Apart from the self-regulatory control analysis of the tip, voltage traces corresponding to trace 106 in Figure 3 enable a range of information as to the system and the sprayed material to be obtained. The wear of the jet can be sensed so that jets nearing the end of their useful life can be replaced. The condition of the medium to be sprayed gives a distinctive pattern whose displacement indicates a change in a material characteristic such as density or homogeneity. Deterioration or unauthorised modification in pump performance can be identified at an early stage. Blockage in the supply line also produces a displacement in the trace pattern which allows rectification before efficient operation is impaired. It is also possible to check that the spray pattern is appropriate on setting up a new jet for a given function.

**Claims**

1. A spraying system comprising a spray unit (12) having a nozzle (14) which is arranged to be coupled by a feed line (13) to a pump (11) supplying pressurised medium, the nozzle (14) being formed of electrically conducting material but electrically isolated from the remainder of the spray unit (12);
   a voltage monitor (17) for detecting the voltage (106) on the nozzle (14);
   a setting device (19, 20) for establishing one or more predetermined voltages (102, 103, 104, 105) indicative of a desired or optimum spray pattern; and
   a comparator for comparing predetermined voltages (102, 103, 104, 105) with the detected voltage (106).

2. A system as claimed in claim 1 in which the comparator provides a control signal to regulate operation of the system or an alarm signal in the event that the detected voltage (106) lies outside predetermined limits (102, 103, 104, 105).

3. A system as claimed in claim 1 or 2 comprising a pressure sensor (18) for detecting the instantaneous pressure (101) of the medium supplied to the spray unit (12), the sensor (18), being arranged to provide an output signal to the comparator which is arranged to provide a control signal to regulate the operation of the system or an alarm signal in the event that the detected pressure (101) lies outside predetermined limits (102, 103, 104, 105).

4. A system as claimed in any preceding claim comprising control means (24, 25) for controlling the pump (11) in response to changes in the detected voltage (106).

5. A system as claimed in any preceding claim comprising nozzle adjuster means (23, 24) for adjusting or clearing the nozzle (14) in response to changes in the detected voltage (106).

6. A method of operating a spray unit (12) having a nozzle (14) which is formed of electrically conducting material but is electrically isolated from the remainder of the spray unit (12) comprising the steps of: detecting the voltage (106) on the nozzle (14) as a medium is sprayed therefrom and comparing the detected voltage (106) with one or more predetermined voltages (102, 103, 104, 105) indicative of a desired or optimum spray pattern.

7. A method as claimed in claim 6 in which operation of the spray unit (12) is regulated or an alarm is provided in the event that the detected voltage (106) lies outside predetermined limits (102, 103, 104, 105).

8. A method as claimed in claim 6 or 7 in which the instantaneous pressure (101) of the medium supplied to the spray unit (12) is detected and operation of the spray unit (12) is regulated or an alarm is provided in the event that the detected pressure (101) lies outside predetermined limits (102, 103, 104, 105).

9. A method as claimed in claim 6, 7 or 8 in which the supply of medium to the nozzle (14) is regulated in response to changes in the detected voltage (106).

10. A method as claimed in claim 6, 7, 8, or 9 in which the nozzle is adjusted or cleared in response to changes in the detected voltage (106).

**Revendications**

1. Système de pulvérisation, caractérisé en ce qu'il comprend une unité de pulvérisation (12) comprenant une buse (14) agencée pour être reliée par une conduite d'alimentation (13) à une pompe (11) qui fournit un agent sous pression, la buse (14) étant faite d'une matière conductrice de l'électricité, mais étant isolée électriquement du reste de l'unité de pulvérisation (12); un dispositif de contrôle de tension (17) destiné à détecter la tension (106) sur la buse (14), un dispositif de réglage (19, 20) destiné à établir une ou plusieurs tensions prédéterminées (102, 103, 104, 105) indiquant une configuration de pulvérisation voulue ou optimale; et un comparateur destiné à comparer les tensions prédéterminées (102, 103, 104, 105) avec la tension détectée (106).

2. Système selon la revendication 1, dans lequel le comparateur produit un signal de commande pour réguler le fonctionnement du système ou un signal d'alarme dans le cas où la tension détectée (106) se situe à l'extérieur des limites prédéterminées (102, 103, 104, 105).

3. Système selon la revendication 1 ou 2, caractérisé en ce qu'il comprend un capteur de pression (18) pour détecter la pression instantanée (101) de l'agent fourni à l'unité de pulvérisation (12), le capteur (18) étant agencé pour produire un signal de sortie pour le comparateur qui est agencé pour produire un signal de commande qui régule le fonctionnement du système ou un signal d'alarme dans le cas où la pression détectée (101) se situe à l'extérieur des limites prédéterminées (102, 103, 104, 105).

4. Système selon l'une quelconque des revendications précédentes, caractérisé en ce qu'il comprend un dispositif de commande (24, 25) pour commander la pompe (11) en réponse à des variations de la tension détectée (106).

5. Système selon l'une quelconque des revendications précédentes, caractérisé en ce qu'il comprend un dispositif de réglage de buse (23, 24) pour régler ou nettoyer la buse (14) en réponse à des variations de la tension détectée (106).

6. Procédé de fonctionnement d'une unité de pulvérisation (12) comportant une buse (14) faite d'une matière conductrice de l'électricité mais isolée électriquement du reste de l'unité de pulvérisation (12), caractérisé en ce qu'on détecte la tension (106) sur la buse (14) lorsqu'un agent est pulvérisé par cette dernière et on compare la tension détectée (106) avec une ou plusieurs tensions prédéterminées (102, 103, 104, 105) indiquant une configuration de pulvérisation voulue ou optimale.

7. Procédé selon la revendication 6, dans lequel le fonctionnement de l'unité de pulvérisation (12) est régulé ou une alarme est produite dans le cas où la tension détectée (106) se situe à l'extérieur de limites prédéterminées (102, 103, 104, 105).

8. Procédé selon la revendication 6 ou 7, dans lequel la pression instantanée (101) de l'agent fourni à l'unité de pulvérisation (12) est détectée et le fonctionnement de l'unité de pulvérisation (12) est régulé ou une alarme est produite dans le cas où la pression détectée (101) se situe à l'extérieur des limites prédéterminées (102, 103, 104, 105).

9. Procédé selon la revendication 6, 7 ou 8, dans lequel l'alimentation en agent de la buse (14) est régulée en réponse à des variations de la tension détectée (106).

10. Procédé selon la revendication 6, 7, 8 ou 9, dans lequel la buse est réglée ou nettoyée en réponse à des changements de la tension détectée (106).

**Patentansprüche**

1. Sprühvorrichtung, gekennzeichnet durch eine Sprüheinheit (12) mit einer Düse (14) die über eine Speiseleitung (13) an eine ein unter Druck stehendes Medium liefernde Pumpe (11) ankoppelbar ist, wobei die Düse (14) aus elektrisch leitendem Material gebildet, jedoch vom Rest der Sprüheinheit (12) elektrisch isoliert ist, einen Spannungsüberwacher (17) zum Erfassen der Spannung (106) an der Düse (14), eine Einstelleinrichtung (19, 20) zum Festlegen einer oder mehrerer vorbestimmter Spannungen (102, 103, 104, 105) die ein gewünschtes oder ein optimales Sprühmuster angeben, und einen Vergleicher zum Vergleichen vorbestimmter Spannungen (102, 103, 104, 105) mit der erfaßten Spannung (106).

2. Vorrichtung nach Anspruch 1, bei der der Vergleicher ein Stellsignal zum Regeln des Betriebs der Vorrichtung liefert oder ein Alarmsignal liefert in dem Fall, daß die erfaßte Spannung (106) außerhalb vorbestimmter Grenzen (102, 103, 104, 105) liegt.

3. Vorrichtung nach Anspruch 1 oder 2, gekennzeichnet durch einen Druckfühler (18) zum Erfassen des momentanen Drucks (101) des der Sprüheinheit (12) zugeführten Mediums, wobei der Fühler (18) derart angeordnet ist, daß er ein Ausgangssignal an den Vergleicher liefert, welcher derart ausgebildet ist, daß er ein Stellsignal zum Regeln des Betriebs der Vorrichtung liefert, oder ein Alarmsignal in dem Fall liefert, daß der erfaßte Druck (101) außerhalb vorbestimmter Grenzen (102, 103, 104, 105) liegt.

4. Vorrichtung nach einem der vorhergehenden Ansprüche, gekennzeichnet durch eine Steuereinrichtung (24, 25) zum Steuern der Pumpe (11) in Abhängigkeit von Änderungen der erfaßten Spannung (106).

5. Vorrichtung nach einem der vorhergehenden Ansprüche, gekennzeichnet durch ein Düsen-Einstelleinrichtung (23, 24) zum Einstellen oder Freigeben der Düse (14) in Abhängigkeit von Änderungen der erfaßten Spannung (106).

6. Verfahren zum Betreiben einer Sprüheinheit (12) mit einer Düse (14), die aus elektrisch leitendem Material besteht, jedoch vom Rest der Sprüheinheit (12) elektrisch isoliert ist, gekennzeichnet durch die Schritte: Erfassen der Spannung (106) an der Düse (14), wenn von ihr ein Medium ausgesprüht wird, und Vergleichen der erfaßten Spannung (106) mit einer oder mehreren vorbestimmten Spannungen (102, 103, 104, 105), die ein gewünschtes oder ein optimales Sprühmuster angeben.

7. Verfahren nach Anspruch 6, bei dem der Betrieb der Sprüheinheit (12) reguliert wird oder ein Alarm in dem Fall gegeben wird, daß die erfaßte Spannung (106) außerhalb vorbestimmter Grenzen (102, 103, 104, 105) liegt.

8. Verfahren nach Anspruch 6 oder 7, dadurch gekennzeichnet, daß der momentane Druck (101) des der Sprüheinheit (12) zugeführten Mediums erfaßt wird und der Betrieb der Sprüheinheit (12) reguliert wird oder ein Alarm für den Fall gegeben wird, daß der erfaßte Druck (101) außerhalb vorbestimmter Grenzen (102, 103, 104, 105) liegt.

9. Verfahren nach Anspruch 6, 7 oder 8, dadurch gekennzeichnet, daß die Zufuhr des Mediums zu der Düse (14) abhängig von Änderungen der erfaßten Spannung (106) geregelt wird.

10. Verfahren nach Anspruch 6, 7, 8 oder 9, dadurch gekennzeichnet, daß die Düse abhängig von Änderungen der erfaßten Spannung (106) eingestellt oder freigegeben wird.

Fig.1.

Fig.2.

0 061 922

Fig.3.

0 061 922